# EUROPÄISCHE PATENTSCHRIFT

(11) **EP 3 467 281 B1**
(45) Veröffentlichungstag und Bekanntmachung des Hinweises auf die Patenterteilung: **02.11.2022**
(21) Anmeldenummer: 18194208.7
(22) Anmeldetag: 13.09.2018
(51) Int. Cl.: F02B 23/06, F02D 13/02, F02F 3/28

(54) **BRENNKRAFTMASCHINE MIT VENTILTASCHEN**
COMBUSION ENGINE WITH VALVE POCKETS
MOTEUR À COMBUSTION INTERNE POURVU DE CHAMBRES DE SOUPAPE

(30) Priorität: 05.10.2017 DE 102017123136
(43) Veröffentlichungstag der Anmeldung: 10.04.2019
(60) Teilanmeldung: 22195117.1
(73) Patentinhaber: MAN Truck & Bus SE, 80995 München (DE)
(72) Erfinder: Renner, Dominik, 91522 Ansbach (DE); Malischewski, Thomas, 91560 Heilsbronn (DE)
(74) Vertreter: v. Bezold & Partner Patentanwälte - PartG mbB

(56) Entgegenhaltungen:
- DE-A1- 3 838 305
- DE-A1-102005 002 389
- DE-A1-102007 027 787
- DE-A1-102009 037 963
- DE-A1-102015 004 357
- US-A1- 2003 200 945
- US-A1- 2012 125 289
- US-A1- 2013 312 697

## Beschreibung

Die Erfindung betrifft eine Brennkraftmaschine mit einem Kolben aufweisend mehrere Ventiltaschen.

Es ist bekannt, einen Kolbenboden eines Kolbens einer Brennkraftmaschine mit Ventiltaschen für Gaswechselventile zu versehen.

Bspw. offenbart die DE 10 2007 027 787 A1 einen Verbrennungsmotor, bei dem in einer Stirnfläche eines Kolbens Ventiltaschen gebildet sind, die Gaswechselventilen gegenüberliegen.

Die DE 10 2015 004357 A1 offenbart einen Kolben mit Ventiltaschen. Die den Einlasstellerventilen zugeordneten Ventiltaschen können eine erste Tiefe aufweisen. Die den Auslasstellerventilen zugeordneten Ventiltaschen können eine zweite Tiefe aufweisen, die zur ersten Tiefe unterschiedlich ist.

Die DE 10 2005 002389 A1 offenbart einen Kolben mit einer Mulde, die für die Ventile Freischnitte aufweist. Die Freischnitte für die Einlassventile können dabei die gleiche Tiefe aufweisen wie die Freischnitte für die Auslassventile. Diese können jedoch auch unterschiedlich sein. Beispielsweise können die Freischnitte für die Auslassventile weniger tief sein als die Freischnitte für die Einlassventile. Dieses kann auch umgekehrt der Fall sein. Die Dimensionierung der Freischnitte kann insbesondere davon abhängen, wie stark beispielsweise eine Ventilüberschneidung und damit eine Öffnung von Ventilen insbesondere in OT angestrebt wird.

Die DE 10 2009 037963 A1 offenbart eine Verbrennungskraftmaschine, wobei ein Kolben mindestens eine Ventiltasche aufweist.

Es ist ferner bekannt, Gaswechseleinlassventile und Gaswechselauslassventile mit einer Ventilüberschneidung zu betätigen. Eine Ventilüberschneidung bezieht sich auf einen Zeitbereich zwischen dem Beginn des Öffnens eines Gaswechseleinlassventils und dem Ende des Schließens eines Gaswechselauslassventils.

Um bspw. große Ventilüberschneidungen bei Dieselmotoren realisieren zu können, müssen Ventiltaschen im Kolben vorgesehen werden. Die Ventilüberschneidung dient zur Optimierung des Ladungswechsels und somit zur Optimierung des Motorgesamtwirkungsgrades. Bei positivem Druckgefälle zwischen Einlass- und Auslassseite wird während der Ventilüberschneidung im Ladungswechsel im Bereich des oberen Totpunkts einer Kolbenbewegung eines Kolbens Luft durch den Brennraum gespült. Die Folgen sind reduzierte Brennraum- und Abgastemperaturen sowie ein gesteigerter Turboladerwirkungsgrad durch den erhöhten Luftdurchsatz.

Dem positiven Effekt des Ladungswechsels steht eine Verschlechterung des Hochdruckwirkungsgrades gegenüber. Aufgrund der benötigten Ventiltaschen wird beispielsweise das Verdichtungsverhältnis gesenkt, was einen negativen Einfluss auf den thermischen Wirkungsgrad hat. Zudem wird beispielsweise das Brennbild durch die Ventiltaschen stark beeinflusst und somit auch die Verbrennungseffizienz. Die Ventiltaschen können bspw. einen Großteil der oberen Muldenkontur einer verbrennungsoptimierten Kolbenmulde abtragen.

Der Erfindung liegt die Aufgabe zu Grunde, einen Verbrennungsmotor mit Ventiltaschen zu schaffen, mit dem der positive Effekt des Ladungswechsels genutzt und der Hochdruckwirkungsgrad verbessert werden kann.

Die Aufgabe wird gelöst durch eine Brennkraftmaschine gemäß dem unabhängigen Anspruch. Vorteilhafte Weiterbildungen sind in den abhängigen Ansprüchen und der Beschreibung angegeben.

Die Brennkraftmaschine ist für ein Kraftfahrzeug geeignet. Die Brennkraftmaschine weist mindestens einen Zylinder auf. Der Zylinder weist ein erstes Gaswechseleinlassventil und ein zweites Gaswechseleinlassventil auf. Der Zylinder weist ein erstes Gaswechselauslassventil und ein zweites Gaswechselauslassventil auf. Der Zylinder weist einen hin- und herbewegbaren Kolben mit einem Kolbenboden, der mehrere Ventiltaschen aufweist, auf. Für das erste Gaswechseleinlassventil, das zweite Gaswechseleinlassventil, das erste Gaswechselauslassventil und das zweite Gaswechselauslassventil ist jeweils eine Ventiltasche vorgesehen und die mehreren Ventiltaschen weisen (im Vergleich zueinander) zumindest teilweise unterschiedliche Tiefen auf. Alternativ ist für das erste Gaswechseleinlassventil und das erste Gaswechselauslassventil jeweils eine Ventiltasche vorgesehen und für das zweite Gaswechseleinlassventil und/oder für das zweite Gaswechselauslassventil ist keine Ventiltasche vorgesehen.

Durch ein Weglassen oder Verkleinern (Abflachen) von beispielsweise einer oder zwei Ventiltaschen kann ein Hochdruckwirkungsgrad der Brennkraftmaschine verbessert werden. U.a. kann durch die weggelassenen oder verkleinerten Ventiltaschen eine verbrennungsoptimierte Muldenkontur weniger stark beeinträchtigt werden. Beispielsweise können die Gaswechselventile, die den verbliebenen oder den nicht abgeflachten Ventiltaschen zugeordnet sind, für eine (große) Ventilüberschneidung genutzt werden. Somit können weiterhin die Vorteile eines optimierten Ladungswechsels durch eine Ventilüberschneidung erzielt werden.

Es wurde ferner herausgefunden, dass der durch die vorliegende Offenbarung bewirkte Effekt bzgl. verbessertem Hochdruckwirkungsgrad bei möglichst gutem Ladungswechsel bei Änderungen der Ventiltaschen der Auslassseite größer ausfallen kann als bei Änderungen der Ventiltaschen auf der Einlassseite. Dementsprechend bietet es sich insbesondere an, für ein Gaswechselauslassventil keine Ventiltasche oder eine nur flache Ventiltasche vorzusehen.

Beispielsweise können insgesamt zwei Ventiltaschen, drei Ventiltaschen oder vier Ventiltaschen vorgesehen sein. Bei zwei Ventiltaschen kann eine Ventiltasche für das erste Gaswechseleinlassventil und eine andere Ventiltasche für das erste Gaswechselauslassventil vorgesehen sein. Bei drei Ventiltaschen kann eine Ventiltasche für das erste Gaswechseleinlassventil, eine weitere Ventiltasche das erste Gaswechselauslassventil und die letzte Ventiltasche für das zweite Gaswechseleinlassventil oder das zweite Gaswechselauslassventil vorgesehen sein.

Gemäß einer Ausführungsvariante der Erfindung schließt das erste Gaswechselauslassventil später als das zweite Gaswechselauslassventil, oder ist das erste Gaswechselauslassventil später als das zweite Gaswechselauslassventil schließbar. Alternativ oder zusätzlich öffnet das erste Gaswechseleinlassventil früher als das zweite Gaswechseleinlassventil oder gleichzeitig mit dem zweiten Gaswechseleinlassventil, oder ist das erste Gaswechseleinlassventil früher als das zweite Gaswechseleinlassventil oder gleichzeitig mit dem zweiten Gaswechseleinlassventil öffenbar. Damit kann insbesondere eine große Ventilüberschneidung (z. B. ungefähr 40° KW (Kurbelwinkel)) zwischen dem ersten Gaswechselauslassventil und dem ersten Gaswechseleinlassventil ermöglicht werden. Hingegen kann zwischen dem zweiten Gaswechselauslassventil und dem zweiten Gaswechseleinlassventil eine kleine Ventilüberschneidung (z. B. ungefähr 20° KW) oder gar keine Ventilüberschneidung stattfinden. Es ist auch möglich, eine große Ventilüberschneidung zwischen dem ersten Gaswechselauslassventil und dem ersten und zweiten Gaswechseleinlassventil zu ermöglichen, während das zweite Gaswechselauslassventil nur eine kleine oder gar keine Ventilüberschneidung mit dem ersten und zweiten Gaswechseleinlassventil aufweist.

In einem besonders bevorzugten Ausführungsbeispiel werden das erste Gaswechselauslassventil und das erste Gaswechseleinlassventil mit einer Ventilüberschneidung betätigt oder sind entsprechend betätigbar. Damit können der Ladungswechsel und somit der Motorwirkungsgrad optimiert werden.

In einem weiteren Ausführungsbeispiel werden das erste Gaswechselauslassventil und das erste Gaswechseleinlassventil mit einer Ventilüberschneidung betätigt oder sind entsprechend betätigbar, die größer als eine Ventilüberschneidung zwischen dem zweiten Gaswechselauslassventil und dem zweiten Gaswechseleinlassventil ist. Damit können für das erste Gaswechseleinlassventil und das erste Gaswechselauslassventil tiefere Ventiltaschen vorgesehen werden als für das zweite Gaswechseleinlassventil und das zweite Gaswechselauslassventil. Die tieferen Ventiltaschen für das erste Gaswechseleinlassventil und das erste Gaswechselauslassventil ermöglichen die größere Ventilüberschneidung und damit einen verbesserten Ladungswechsel. Die weniger tiefen (abgeflachten) Ventiltaschen haben einen geringeren Einfluss auf die verbrennungsoptimierte Kolbenmulde und damit auf die Verbrennung.

Alternativ können das erste Gaswechselauslassventil und das erste Gaswechseleinlassventil mit einer Ventilüberschneidung betätigt werden oder betätigbar sein, und das zweite Gaswechselauslassventil und das zweite Gaswechseleinlassventil ohne Ventilüberschneidung betätigt werden oder betätigbar sein. Damit können für das erste Gaswechseleinlassventil und das erste Gaswechselauslassventil Ventiltasche vorgesehen werden. Für das zweite Gaswechseleinlassventil und das zweite Gaswechselauslassventil werden hingegen keine Ventiltaschen vorgesehen. Die Ventiltaschen für das erste Gaswechseleinlassventil und das erste Gaswechselauslassventil ermöglichen eine Ventilüberschneidung und damit einen verbesserten Ladungswechsel. Das Weglassen der Ventiltaschen für das zweite Gaswechselauslassventil und das zweite Gaswechseleinlassventil ermöglicht, den Einfluss einer verbrennungsoptimierten Kolbenmulde auf die Verbrennung zu erhöhen.

In einer Ausführungsform liegt eine Ventilüberschneidung zwischen dem ersten Gaswechselauslassventil und dem ersten Gaswechseleinlassventil in einem Bereich zwischen 30°KW und 50° KW, insbesondere bei ungefähr 40° KW. Alternativ oder zusätzlich liegt eine Ventilüberschneidung zwischen dem zweiten Gaswechselauslassventil und dem zweiten Gaswechseleinlassventil in einem Bereich zwischen 0°KW und 30° KW, insbesondere bei ungefähr 20° KW.

In einer Weiterbildung findet eine Spülung des Zylinders während der Ventilüberschneidung im Wesentlichen zwischen dem ersten Gaswechseleinlassventil und dem ersten Gaswechselauslassventil, die sich insbesondere direkt oder schräg gegenüberliegen, statt. Damit kann eine möglichst gute Spülung und Restgasreduzierung bei schräg gegenüberliegenden Gaswechselventilen oder ein möglichst großer Massenstrom bei direkt gegenüberliegenden Gaswechselventilen erzielt werden. Alternativ findet eine Spülung im Wesentlichen zwischen dem ersten Gaswechseleinlassventil, dem zweiten Gaswechseleinlassventil und dem ersten Gaswechselauslassventil statt. Damit kann sowohl eine gute Spülung und Restgasreduzierung als auch ein möglichst großer Massenstrom erzielt werden.

In einer Ausführungsform werden das erste Gaswechselauslassventil und das zweite Gaswechselauslassventil unabhängig voneinander betätigt oder sind entsprechend betätigbar. Alternativ oder zusätzlich werden das erste Gaswechseleinlassventil und das zweite Gaswechseleinlassventil unabhängig voneinander betätigt oder sind entsprechend betätigbar. Damit können Gaswechselventile unterschiedliche, voneinander unabhängige Ventilsteuerkurven aufweisen.

Insbesondere kann ein variabler Ventiltrieb, zum Beispiel ein Schiebenockensystem, zum Betätigen des ersten Gaswechselauslassventils, des zweiten Gaswechselauslassventils, des ersten Gaswechseleinlassventils und/oder des zweiten Gaswechseleinlassventils vorgesehen sein.

Beispielsweise kann das erste Gaswechselauslassventil, das zweite Gaswechselauslassventil, das erste Gaswechseleinlassventil und/oder das zweite Gaswechseleinlassventil mittels eines eigenen Kipphebels oder Schlepphebels betätigt werden.

In einer weiteren Ausführungsform ist ein Ventilhub des ersten Gaswechselauslassventils am oberen Totpunkt (OT) einer Kolbenbewegung des Kolbens größer als ein Ventilhub des zweiten Gaswechselauslassventils am oberen Totpunkt. Alternativ oder zusätzlich ist ein Ventilhub des ersten Gaswechseleinlassventils am oberen Totpunkt der Kolbenbewegung des Kolbens größer oder gleich einem Ventilhub des zweiten Gaswechseleinlassventils am oberen Totpunkt. Damit kann, je nach Anforderung, insbesondere für das zweite Gaswechselauslassventil eine flache oder gar keine Ventiltasche vorgesehen werden. Weiterhin kann für das zweite Gaswechseleinlassventil, je nach Anforderung, eine tiefe, eine flache oder gar keine Ventiltasche vorgesehen werden.

In einer besonders bevorzugten Ausführungsvariante weist der Kolbenboden eine Kolbenbodenmulde auf. Insbesondere kann die Kolbenbodenmulde verbrennungsoptimiert ausgebildet sein.

Gemäß einer Ausführungsvariante der Erfindung ist eine Maximaltiefe einer ersten Auslassventil-Ventiltasche der mehreren Ventiltaschen, die für das erste Gaswechselauslassventil vorgesehen ist, größer als eine Maximaltiefe einer zweiten Auslassventil-Ventiltasche der mehreren Ventiltaschen, die für das zweite Gaswechselauslassventil vorgesehen ist. Damit kann die weniger tiefe zweite Auslassventil-Ventiltasche den Hochdruckwirkungsgrad positive beeinflussen. In einer Weiterbildung liegt die Maximaltiefe der ersten Auslassventil-Ventiltasche in einem Bereich bis zu 4 mm. Alternativ oder zusätzlich liegt die Maximaltiefe der zweiten Auslassventil-Ventiltasche in einem Bereich bis zu 2 mm.

Gemäß einer Ausführungsvariante der Erfindung ist eine Maximaltiefe einer ersten Einlassventil-Ventiltasche der mehreren Ventiltaschen, die für das erste Gaswechseleinlassventil vorgesehen ist, größer oder gleich einer Maximaltiefe einer zweiten Einlassventil-Ventiltasche der mehreren Ventiltaschen, die für das zweite Gaswechseleinlassventil vorgesehen ist, ist. Damit kann, je nach Anforderung, die weniger tiefe zweite Einlassventil-Ventiltasche den Hochdruckwirkungsgrad positiv beeinflussen. Alternative können zwei weniger tiefe Einlassventil-Ventiltaschen vorgesehen sein, um den Hochdruckwirkungsgrad positiv zu beeinflussen.

In einer Weiterbildung liegt die Maximaltiefe der ersten Einlassventil-Ventiltasche in einem Bereich zwischen größer als 0 mm und 2 mm. Alternativ oder zusätzlich liegt die Maximaltiefe der zweiten Einlassventil-Ventiltasche in einem Bereich zwischen größer als 0 mm und 2 mm.

In einem weiteren Ausführungsbeispiel ist eine Tiefe der mehreren Ventiltaschen jeweils an einen Ventilhub des jeweiligen Gaswechseleinlassventils und Gaswechselauslassventils am oberen Totpunkt einer Kolbenbewegung des Kolbens angepasst.

Es ist möglich, dass einige oder mehrere der Ventiltaschen miteinander verbunden sind und/oder ineinander übergehen.

Vorzugsweise liegen die Ventiltaschen den jeweiligen Gaswechselventilen gegenüber. Zum Beispiel kann eine erste Auslassventil-Ventiltasche dem ersten Gaswechselauslassventil gegenüberliegen, und eine erste Einlassventil-Ventiltasche kann dem ersten Gaswechseleinlassventil gegenüberliegen.

Beispielsweise sind das erste Gaswechseleinlassventil und das zweite Gaswechseleinlassventil zum Zuführen von Luft oder einem Luft-Kraftstoff-Gemisch in eine Verbrennungskammer des Zylinders ausgebildet und/oder das erste Gaswechselauslassventil und das zweite Gaswechselauslassventil sind zum Abführen von Abgas aus einer Verbrennungskammer des Zylinders in einen Abgasstrang ausgebildet. Insbesondere kann der Kolbenboden eine Verbrennungskammer des Zylinders begrenzen.

Die Erfindung betrifft auch ein Kraftfahrzeug, insbesondere ein Nutzfahrzeug (zum Beispiel ein Lastkraftwagen oder ein Omnibus), mit einer Brennkraftmaschine wie hierin offenbart.

Es ist allerdings auch möglich, die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Zylinders einer Brennkraftmaschine;
- Figur 2: eine Ansicht von unten auf vier Gaswechselventile eines Zylinders einer Brennkraftmaschine;
- Figur 3: eine perspektivische Ansicht eines Kolbenbodens mit vier Ventiltaschen gemäß der vorliegenden Offenbarung;
- Figur 4: ein Ventilsteuerdiagramm für zwei Gaswechseleinlassventile und zwei Gaswechselauslassventile gemäß der vorliegenden Offenbarung;
- Figur 5: ein Zylinderdruckdiagramm für unterschiedliche Ventilüberschneidungen der Gaswechselventile;
- Figur 6: einen Kolbenboden mit drei Ventiltaschen gemäß der vorliegenden Offenbarung;
- Figur 7: einen Kolbenboden mit zwei Ventiltaschen gemäß der vorliegenden Offenbarung;
- Figur 8: eine Ansicht von unten auf vier Gaswechselventile eines Zylinders einer Brennkraftmaschine und einer beispielhaften Spülung beim Ladungswechsel gemäß der vorliegenden Offenbarung;
- Figur 9: eine Ansicht von unten auf vier Gaswechselventile eines Zylinders einer Brennkraftmaschine und einer weiteren beispielhaften Spülung beim Ladungswechsel gemäß der vorliegenden Offenbarung; und
- Figur 10: eine Ansicht von unten auf vier Gaswechselventile eines Zylinders einer Brennkraftmaschine und einer weiteren anderen beispielhaften Spülung beim Ladungswechsel gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

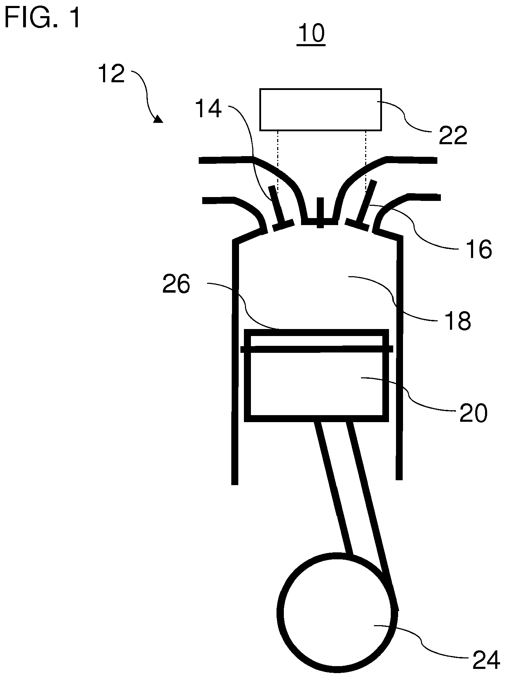

Die Figur 1 zeigt einen Zylinder 12 einer Brennkraftmaschine 10. Die Brennkraftmaschine 10 ist eine Viertakt-Brennkraftmaschine, insbesondere eine Viertakt-Diesel-Brennkraftmaschine oder eine Viertakt-Benzin-Brennkraftmaschine. Vorzugsweise ist die Brennkraftmaschine 10 in einem Nutzfahrzeug, zum Beispiel einem Lastkraftwagen oder einem Omnibus, zum Antreiben des Nutzfahrzeugs umfasst.

Der Zylinder 12 weist mehrere Gaswechseleinlassventile 14 (nur eines in Fig. 1 gezeigt), mehrere Gaswechselauslassventile 16 (nur eines in Fig. 1 gezeigt), eine Verbrennungskammer 18 und einen Kolben 20 auf.

Die Gaswechseleinlassventile 14 verbinden die Verbrennungskammer 18 mit einem Luftzufuhrsystem der Brennkraftmaschine 10 zum Zuführen von Verbrennungsluft oder eines Luft-Kraftstoff-Gemischs in die Verbrennungskammer 18. Die Gaswechselauslassventile 16 verbinden die Verbrennungskammer 18 mit einem Abgasstrang der Brennkraftmaschine 10 zum Abführen von Abgasen. Beispielsweise können zwei Gaswechseleinlassventile 14 und zwei Gaswechselauslassventile 16 je Zylinder 12 und eine Mehrzahl von Zylindern 12 vorgesehen sein.

Die Gaswechseleinlassventile 14 und die Gaswechselauslassventile 16 können jeweils einzeln und jeweils unabhängig voneinander betätigbar sein. Beispielsweise kann für jedes Gaswechseleinlassventil 14 und jedes Gaswechselauslassventil 16 ein eigener Kipphebel oder Schlepphebel eines variablen Ventiltriebs 22 vorgesehen sein. Der variable Ventiltrieb 22 kann beispielsweise als ein Schiebenockensystem ausgebildet sein. Das Schiebenockensystem kann eine Mehrzahl von Nockenträgern mit mehreren Nocken aufweisen. Der Nockenträger kann drehfest und axial verschiebbar auf einer Nockenwelle angeordnet sein. Die Gaswechseleinlassventile 14 und die Gaswechselauslassventil 16 werden in Abhängigkeit von einer Axialposition des Nockenträgers von verschiedenen Nocken des Nockenträgers betätigt. Es ist beispielsweise auch möglich, dass die Gaswechseleinlassventile 14 nicht einzeln und unabhängig voneinander betätigbar sind.

Der Kolben 20 ist auf eine bekannte Art und Weise hin- und herbewegbar in dem Zylinder 12 angeordnet und mit einer Kurbelwelle 24 verbunden. Der Kolben 20 weist einen zur Verbrennungskammer 18 gerichteten Kolbenboden 26 auf.

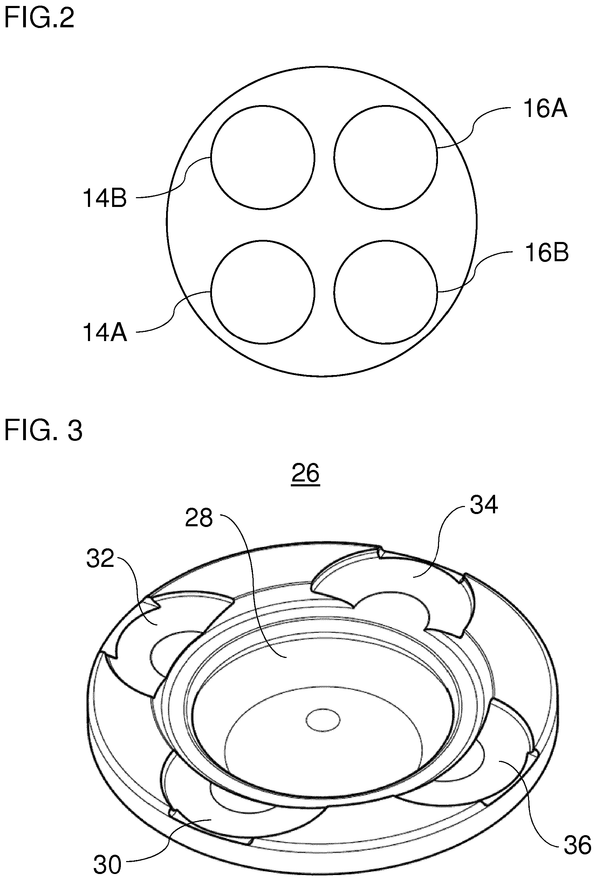

Die Figur 2 zeigt eine Ansicht von unten eines Abschnitts eines Zylinderkopfes, der die Verbrennungskammer 18 (siehe Figur 1) abdeckt. Man erkennt, dass vier Gaswechselventile als Tellerventile vorgesehen sind. Im Einzelnen ist ein erstes Gaswechseleinlassventil 14A, ein zweites Gaswechseleinlassventil 14B, ein erstes Gaswechselauslassventil 16A und ein zweites Gaswechselauslassventil 16B vorgesehen.

Die Figur 3 zeigt eine perspektivische Ansicht des Kolbenbodens 26. Der Kolbenboden 26 weist eine verbrennungsoptimierte Kolbenbodenmulde 28 und vier Ventiltaschen 30, 32, 34 und 36 auf. Im Einzelnen ist eine erste Einlassventil-Ventiltasche 30 für das erste Gaswechseleinlassventil 14A (siehe Figur 2) vorgesehen. Eine zweite Einlassventil-Ventiltasche 32 ist für das zweite Gaswechseleinlassventil 14B (siehe Figur 2) vorgesehen. Eine erste Auslassventil-Ventiltasche 34 ist für das erste Gaswechselauslassventil 16A (siehe Figur 2) vorgesehen. Eine zweite Auslassventil-Ventiltasche 36 ist für das zweite Gaswechselauslassventil 16B (siehe Figur 2) vorgesehen.

Die vorliegende Offenbarung beruht auf der Erkenntnis, dass das Vorsehen von Ventiltaschen im Kolbenboden den Hochdruckwirkungsgrad u.a. durch Veränderung der verbrennungsoptimierten Kolbenbodenmulde 28 beeinträchtigen kann. Daher wird vorgeschlagen, den Einfluss der Ventiltaschen auf den Hochdruckwirkungsgrad zu verringern, ohne auf die durch die Ventiltaschen ermöglichte Ventilüberschneidung zur Spülung des Zylinders zu verzichten. Im Einzelnen wird vorgeschlagen, eine bis zwei der Ventiltaschen entfallen zu lassen oder weniger tief auszubilden, ohne Nachteile im Ladungswechsel zu erfahren. Mit dem Entfall von ein bis zwei Ventiltaschen bzw. einer Verringerung einer Maximaltiefe von ein bis zwei Ventiltaschen kann bspw. eine Effizienz der Verbrennung dadurch gesteigert werden, dass die verbrennungsoptimierte Form der Kolbenbodenmulde 28 weniger beeinträchtigt wird.

Beispielsweise können die Ventiltaschen 30, 32, 34 und 36 unterschiedliche Maximaltiefen aufweisen. Zum Beispiel können die erste Einlassventil-Ventiltasche 30 und die erste Auslassventil-Ventiltasche 34 mit einer größeren Maximaltiefe vorgesehen sein als die zweite Einlassventil-Ventiltasche 32 und die zweite Auslassventil-Ventiltasche 36. Beispielsweise kann die erste Auslassventil-Ventiltasche 34 eine Maximaltiefe in einem Bereich zwischen 2 mm und 4 mm aufweisen. Die zweite Auslassventil-Ventiltasche 34, die erste Einlassventil-Ventiltasche 30 und die zweite Einlassventil-Ventiltasche können bspw. in einem Bereich zwischen 0 mm und 2 mm tief sein.

Die Tiefen der Ventiltaschen 30-36 beeinflussen, wie weit ein Gaswechselventil am oberen Totpunkt einer Kolbenbewegung des Kolbens geöffnet werden kann. Umso tiefer eine Ventiltaschen ist, desto weiter kann Gaswechselventil am oberen Totpunkt geöffnet werden, ohne den Kolbenboden zu berühren. Die tieferen Ventiltaschen 30, 34 ermöglichen eine größere Ventilüberschneidung zwischen dem ersten Gaswechseleinlassventil 14A und dem ersten Gaswechselauslassventil 16A.

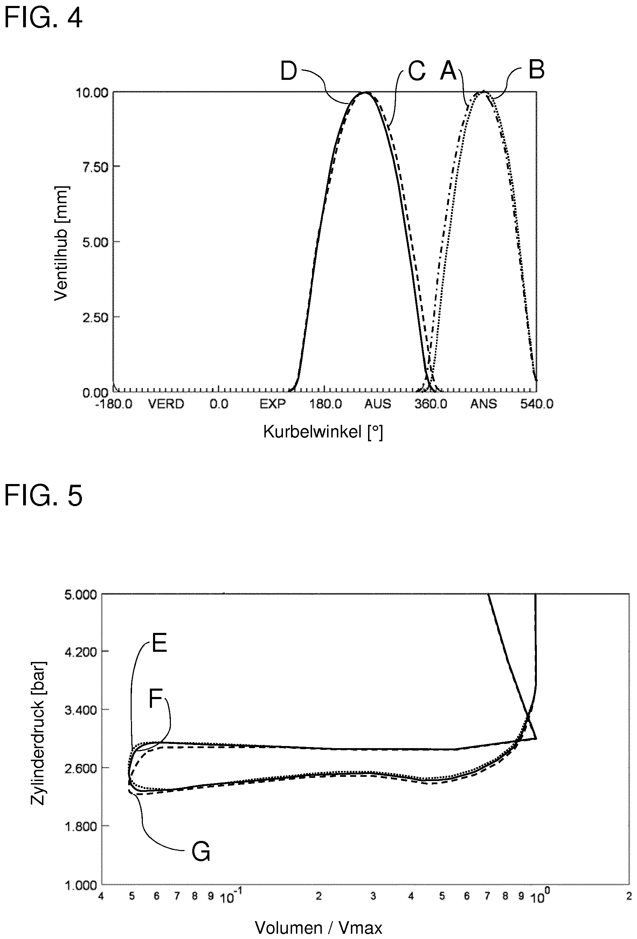

Die Figur 4 zeigt beispielhaft ein Ventilsteuerdiagramm. Im Ventilsteuerdiagramm sind die Ventilhübe der Gaswechselventile 14A, 14B, 16A, 16B dargestellt. Eine strichpunktierte Kurve A zeigt den Ventilhub für das erste Gaswechseleinlassventil 14A. Eine gepunktete Kurve B zeigt den Ventilhub für das zweite Gaswechseleinlassventil 14B. Eine gestrichelte Kurve C zeigt den Ventilhub für das erste Gaswechselauslassventil 16A. Eine durchgezogene Kurve D zeigte den Ventilhub für das zweite Gaswechselauslassventil 16B.

Man erkennt, dass das erste Gaswechselauslassventil 16A (Kurve C) später schließt als das zweite Gaswechselauslassventil 16B (Kurve D). Zusätzlich öffnet das erste Gaswechseleinlassventil 14A (Kurve A) früher als das zweite Gaswechseleinlassventil 14B (Kurve B). Damit liegt eine große Ventilüberschneidung im Bereich von rund 40° KW (Kurbelwinkel) zwischen dem ersten Gaswechselauslassventil 16A (Kurve C) und dem ersten Gaswechseleinlassventil 14A (Kurve A) vor. Zwischen dem zweiten Gaswechselauslassventil 16B (Kurve D) und dem zweiten Gaswechseleinlassventil 14B (Kurve B) gibt es eine kleine Ventilüberschneidung im Bereich von rund 20° KW.

Es wurde herausgefunden, dass sich bei einer großen Ventilüberschneidung zwischen einem Gaswechseleinlassventil und einem Gaswechselauslassventil eine Spülung erreichen lässt, die annähernd einer Spülung der Verbrennungskammer entspricht, die bei einer großen Ventilüberschneidung zwischen zwei Gaswechseleinlassventilen und zwei Gaswechselauslassventilen erzielt wird. Dieser Zusammenhang ist in Figur 5 dargestellt.

Die Figur 5 zeigt den Zylinderdruckverlauf in Abhängigkeit von einem Volumen der Verbrennungskammer für drei verschiedene Konfigurationen. Eine Kurve E zeigt den Zylinderdruckverlauf bei zwei Gaswechseleinlassventilen und zwei Gaswechselauslassventilen, die alle mit einer Ventilüberschneidung von 40° KW betätigt werden. Eine Kurve F zeigt den Zylinderdruckverlauf bei einer Ventilbetätigung gemäß Figur 4 (ein Gaswechseleinlassventil und ein Gaswechselauslassventil weisen eine Ventilüberstellung von 40° KW auf, ein weiteres Gaswechseleinlassventil und ein weiteres Gaswechselauslassventil weisen eine Ventilüberschneidung von 20° KW auf). Eine Kurve G zeigt den Zylinderdruckverlauf bei zwei Gaswechseleinlassventilen und zwei Gaswechselauslassventilen, die alle mit einer Ventilüberschneidung von 20° KW betätigt werden.

Man erkennt, dass die Kurven E und F sich nur unerheblich voneinander unterscheiden, wohingegen die Kurve G stärkere Abweichungen zu den Kurven E und F zeigt. Die ähnlichen Zylinderdruckverläufe der Kurven E und F sind ein Indikator dafür, dass die Spülung während der Ventilüberschneidung ähnlich stark bei den Kurven E und F ausgeprägt ist. Damit können mit einer Ventilbetätigung gemäß Figur 4 annähernd die gleichen Effekte bezüglich der Spülung und des Ladungswechsels erzielt werden wie bei herkömmlichen Techniken, bei denen alle vier Gaswechselventile mit einer großen Ventilüberschneidung betätigt werden. Für das Spülen der Verbrennungskammer während der Ventilüberschneidung kann es folglich reichen, wenn lediglich ein Gaswechseleinlassventil und ein Gaswechselauslassventil gleichzeitig geöffnet sind. Dies gilt insbesondere bei niedrigen Drehzahlen, bei denen eine längere Verweilzeit besteht. Die Ventilhubkurven der anderen Gaswechselventile können ohne oder mit nur geringer Überschneidung ausgelegt werden. Im Extremfall werden somit gar keine Ventiltaschen für die anderen Gaswechselventile benötigt.

Bei Anwendung moderner Dekompressionsbremsen, bei denen ein Gaswechselauslassventil abweichend von einer normalen Betätigung beispielsweise am Ende des Verdichtungstaktes geöffnet wird, wie zum Beispiel in der DE 10 2013 019 183 A1 offenbart ist, ist eine Auslassventil-Ventiltasche prinzipbedingt notwendig. Diese Ventiltaschen und das zugeordnete Gaswechselauslassventil können somit ohne zusätzlichen Schadraum generieren zu müssen für die Ventilüberschneidung eingesetzt werden. Einlassseitig muss der beste Kompromiss zwischen einer tieferen Ventiltaschen oder zwei weniger tiefen Ventiltaschen gefunden werden, um die Ziele der Ventilüberschneidung zu erreichen.

Damit können die Konzepte der vorliegenden Offenbarung bei unterschiedlichen Kolbenböden und unterschiedlichen Ventilbetätigungen eingesetzt werden.

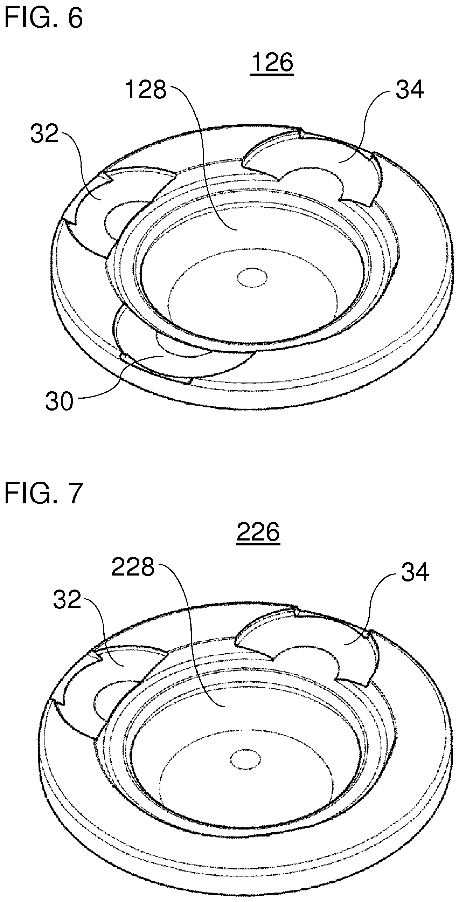

In Figur 6 ist ein Ausführungsbeispiel gezeigt, bei der ein Kolbenboden 126 nur drei Ventiltaschen 30, 32, 34 und eine verbrennungsoptimierte Kolbenbodenmulde 128 aufweist. Im Einzelnen ist eine erste Einlassventil-Ventiltasche 30 für das erste Gaswechseleinlassventil 14A (siehe Figur 2) vorgesehen. Eine zweite Einlassventil-Ventiltasche 32 ist für das zweite Gaswechseleinlassventil 14B (siehe Figur 2) vorgesehen. Eine erste Auslassventil-Ventiltasche 34 ist für das erste Gaswechselauslassventil 16A (siehe Figur 2) vorgesehen. Für das zweite Gaswechselauslassventil 16B (siehe Figur 2) ist keine Ventiltasche vorgesehen. Die erste Einlassventil-Ventiltasche 30 und die zweite Einlassventil-Ventiltasche 32 können bspw. gleich tief oder unterschiedlich tief sein.

Damit kann beispielsweise eine große Ventilüberschneidung zwischen dem erste und/oder zweiten Gaswechseleinlassventil 14A, 14B einerseits und dem ersten Gaswechselauslassventil 16A andererseits realisiert werden. Das zweite Gaswechselauslassventil 16B kann pünktlich zum oder kurz nach dem Ende des Auslasstaktes schließen.

In Figur 7 ist ein Ausführungsbeispiel gezeigt, bei der ein Kolbenboden 226 nur zwei Ventiltaschen 32, 34 und eine verbrennungsoptimierte Kolbenbodenmulde 228 aufweist. Die Ventiltasche 32 ist einem Gaswechseleinlassventil und die Ventiltasche 34 ist einem Gaswechselauslassventil zugeordnet. Das jeweils andere Gaswechseleinlassventil und Gaswechselauslassventil weist hingegen keine Ventiltasche auf.

Damit kann beispielsweise eine große Ventilüberschneidung zwischen einem Gaswechseleinlassventil und einem Gaswechselauslassventil realisiert werden. Zwischen dem jeweils anderen Gaswechseleinlassventil und Gaswechselauslassventil findet keine oder eine nur sehr geringe Ventilüberschneidung statt.

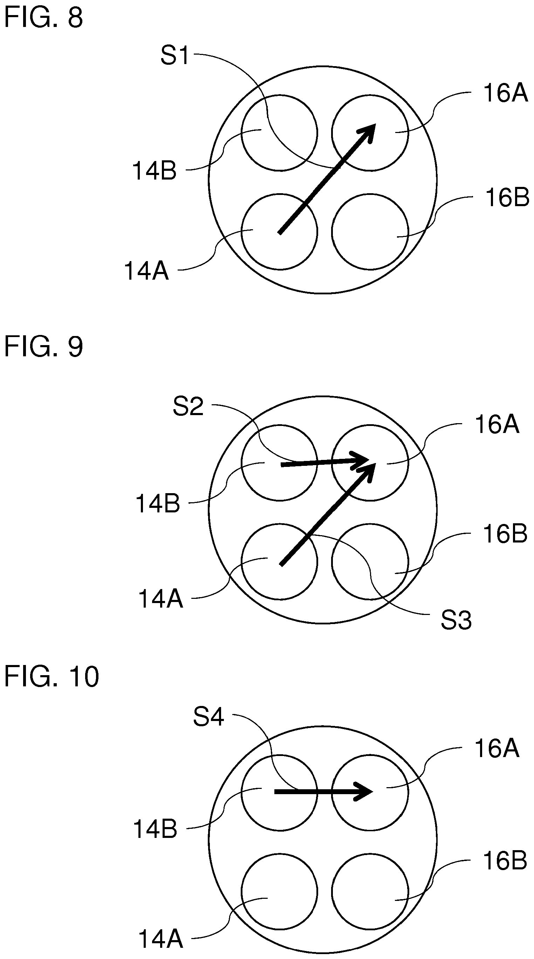

Die Figuren 8 bis 10 zeigen unterschiedliche Beispiele dafür, wie die Spülung beim Übergang zwischen Auslasstakt und Einlasstakt gemäß der vorliegenden Offenbarung realisiert werden kann. Die Spülung findet im Wesentlichen zwischen denjenigen Gaswechselventilen statt, die eine große Ventilüberschneidung miteinander aufweisen.

Gemäß Figur 8 kann beispielsweise eine Spülung (Pfeil S1) im Wesentlichen zwischen einem Gaswechseleinlassventil 14A und einem Gaswechselauslassventil 16A, die sich schräg gegenüberliegen, stattfinden. Hierdurch kann eine möglichst gute Spülung bzw. Restgasreduzierung und Kühlung des Brennraums erzielt werden. Zwischen den Gaswechselventilen 14A und 16A besteht eine große Ventilüberschneidung. Zwischen den Gaswechselventilen 14B und 16B besteht eine kleine oder gar keine Ventilüberschneidung.

Gemäß Figur 9 kann eine Spülung (Pfeile S2 und S3) im Wesentlichen zwischen zwei Gaswechseleinlassventilen 14A,14B und einem Gaswechselauslassventil 16A stattfinden. Zwischen den Gaswechselventilen 14A, 14B und 16A besteht eine große Ventilüberschneidung. Hierdurch kann sowohl eine gute Spülung und Restgasreduzierung als auch ein möglichst großer Massenstrom erzielt werden.

Gemäß Figur 10 kann beispielsweise eine Spülung (Pfeil S4) im Wesentlichen zwischen einem Gaswechseleinlassventil 14B und einem Gaswechselauslassventil 16A, die sich direkt gegenüberliegen, stattfinden. Hierdurch kann ein möglichst großer Massenstrom während der Ventilüberschneidung erzielt werden. Zwischen den Gaswechselventilen 14B und 16A besteht eine große Ventilüberschneidung. Zwischen den Gaswechselventilen 14A und 16B besteht eine kleine oder gar keine Ventilüberschneidung.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den durch die Ansprüche definierten Schutzbereich fallen.

### Bezugszeichenliste

- 10: Brennkraftmaschine
- 12: Zylinder
- 14: Gaswechseleinlassventil
- 14A: Erstes Gaswechseleinlassventil
- 14B: Zweites Gaswechseleinlassventil
- 16: Gaswechselauslassventil
- 16A: Erstes Gaswechselauslassventil
- 16B: Zweites Gaswechselauslassventil
- 18: Verbrennungskammer
- 20: Kolben
- 22: Variabler Ventiltrieb
- 24: Kurbelwelle
- 26: Kolbenboden
- 28: Kolbenbodenmulde
- 30: Erste Einlassventil-Ventiltasche
- 32: Zweite Einlassventil-Ventiltasche
- 34: Erste Auslassventil-Ventiltasche
- 36: Zweite Auslassventil-Ventiltasche
- 126: Kolbenboden
- 128: Kolbenbodenmulde
- 226: Kolbenboden
- 228: Kolbenbodenmulde

- A-D: Ventilsteuerkurven
- E-G: Zylinderdruckverläufe
- S1-S4: Spülungsrichtung

## Patentansprüche

1. Brennkraftmaschine (10) für ein Kraftfahrzeug, mit mindestens einem Zylinder (12), der aufweist:
ein erstes Gaswechseleinlassventil (14A) und ein zweites Gaswechseleinlassventil (14B);
ein erstes Gaswechselauslassventil (16A) und ein zweites Gaswechselauslassventil (16B); und
einen hin- und herbewegbaren Kolben (20) mit einem Kolbenboden (26; 126; 226), der mehrere Ventiltaschen (30, 32, 34, 36) aufweist, wobei:
a) für das erste Gaswechseleinlassventil (14A), das zweite Gaswechseleinlassventil (14B), das erste Gaswechselauslassventil (16A) und das zweite Gaswechselauslassventil (16B) jeweils eine Ventiltasche (30, 32, 34, 36) vorgesehen ist und die mehreren Ventiltaschen (30; 32; 34, 36) zumindest teilweise unterschiedliche Tiefen aufweisen, wobei
- das erste Gaswechselauslassventil (16A) später als das zweite Gaswechselauslassventil (16B) schließt oder schließbar ist und eine Maximaltiefe einer ersten Auslassventil-Ventiltasche (34) der mehreren Ventiltaschen, die für das erste Gaswechselauslassventil (16A) vorgesehen ist, größer als eine Maximaltiefe einer zweiten Auslassventil-Ventiltasche (36) der mehreren Ventiltaschen, die für das zweite Gaswechselauslassventil (16B) vorgesehen ist, ist; und/oder
- das erste Gaswechseleinlassventil (14A) früher als das zweite Gaswechseleinlassventil (14B) öffnet oder öffenbar ist und eine Maximaltiefe einer ersten Einlassventil-Ventiltasche (30) der mehreren Ventiltaschen, die für das erste Gaswechseleinlassventil (14A) vorgesehen ist, größer als eine Maximaltiefe einer zweiten Einlassventil-Ventiltasche (32) der mehreren Ventiltaschen, die für das zweite Gaswechseleinlassventil (14B) vorgesehen ist, ist; oder
b) für das erste Gaswechseleinlassventil (14A) und das erste Gaswechselauslassventil (16A) jeweils eine Ventiltasche (30; 34) vorgesehen ist, und wobei:
- für das zweite Gaswechseleinlassventil (14B) keine Ventiltasche vorgesehen ist und das erste Gaswechseleinlassventil (14A) früher als das zweite Gaswechseleinlassventil (14B) öffnet oder öffenbar ist; und/oder
- für das zweite Gaswechselauslassventil (16B) keine Ventiltasche vorgesehen ist und das erste Gaswechselauslassventil (16A) später als das zweite Gaswechselauslassventil (16B) schließt oder schließbar ist.

2. Brennkraftmaschine (10) nach Anspruch 1, wobei:
das erste Gaswechselauslassventil (16A) und das erste Gaswechseleinlassventil (14A) mit einer Ventilüberschneidung betätigt werden oder betätigbar sind.

3. Brennkraftmaschine (10) nach einem der vorherigen Ansprüche, wobei:
das erste Gaswechselauslassventil (16A) und das erste Gaswechseleinlassventil (14A) mit einer Ventilüberschneidung betätigt werden oder betätigbar sind, die größer als eine Ventilüberschneidung zwischen dem zweiten Gaswechselauslassventil (16B) und dem zweiten Gaswechseleinlassventil (14B) ist; oder
das erste Gaswechselauslassventil (16A) und das erste Gaswechseleinlassventil (14A) mit einer Ventilüberschneidung betätigt werden oder betätigbar sind, und das zweite Gaswechselauslassventil (16B) und das zweite Gaswechseleinlassventil (14B) ohne Ventilüberschneidung betätigt werden oder betätigbar sind.

4. Brennkraftmaschine (10) nach Anspruch 3, wobei:
eine Ventilüberschneidung zwischen dem ersten Gaswechselauslassventil (16A) und dem ersten Gaswechseleinlassventil (14A) in einem Bereich zwischen 30° KW und 50° KW, insbesondere bei ungefähr 40° KW, liegt; und/oder
eine Ventilüberschneidung zwischen dem zweiten Gaswechselauslassventil (16B) und dem zweiten Gaswechseleinlassventil (14B) in einem Bereich zwischen 0° KW und 30° KW, insbesondere bei ungefähr 20° KW, liegt.

5. Brennkraftmaschine (10) nach einem der Ansprüche 3 bis 4, wobei eine Spülung des Zylinders (12) während der Ventilüberschneidung:
im Wesentlichen zwischen dem ersten Gaswechseleinlassventil (14A) und dem ersten Gaswechselauslassventil (16A), die sich insbesondere direkt oder schräg gegenüberliegen, stattfindet; oder
im Wesentlichen zwischen dem ersten Gaswechseleinlassventil (14A), dem zweiten Gaswechseleinlassventil (14B) und dem ersten Gaswechselauslassventil (16A) stattfindet.

6. Brennkraftmaschine (10) nach einem der vorherigen Ansprüche, wobei:
das erste Gaswechselauslassventil (16A) und das zweite Gaswechselauslassventil (16B) unabhängig voneinander betätigt werden oder betätigbar sind; und/oder
das erste Gaswechseleinlassventil (14A) und das zweite Gaswechseleinlassventil (14B) unabhängig voneinander betätigt werden oder betätigbar sind.

7. Brennkraftmaschine (10) nach einem der vorherigen Ansprüche, wobei:
ein Ventilhub des ersten Gaswechselauslassventils (16A) am oberen Totpunkt einer Kolbenbewegung des Kolbens (20) größer ist als ein Ventilhub des zweiten Gaswechselauslassventils (16B) am oberen Totpunkt; und/oder
ein Ventilhub des ersten Gaswechseleinlassventils (14A) am oberen Totpunkt der Kolbenbewegung des Kolbens (20) größer oder gleich einem Ventilhub des zweiten Gaswechseleinlassventils (14B) am oberen Totpunkt ist.

8. Brennkraftmaschine (10) nach einem der vorherigen Ansprüche, wobei:
der Kolbenboden (26; 126; 226) eine Kolbenbodenmulde (28; 128; 228) aufweist.

9. Brennkraftmaschine (10) nach einem der vorherigen Ansprüche, wobei:
die Maximaltiefe der ersten Auslassventil-Ventiltasche (34) in einem Bereich bis zu 4 mm liegt und die Maximaltiefe der zweiten Auslassventil-Ventiltasche (36) in einem Bereich bis zu 2 mm liegt.

10. Brennkraftmaschine (10) nach einem der vorherigen Ansprüche, wobei:
die Maximaltiefe der ersten Einlassventil-Ventiltasche (30) in einem Bereich zwischen größer als 0 mm und 2 mm liegt; und
die Maximaltiefe der zweiten Einlassventil-Ventiltasche (32) in einem Bereich zwischen größer als 0 mm und 2 mm liegt.

11. Brennkraftmaschine (10) nach einem der vorherigen Ansprüche, wobei:
eine Tiefe der mehreren Ventiltaschen (30, 32, 34, 36) jeweils an einen Ventilhub des jeweiligen Gaswechseleinlassventils (14A, 14B) und Gaswechselauslassventils (16A, 16B) am oberen Totpunkt einer Kolbenbewegung des Kolbens (20) angepasst ist.

12. Kraftfahrzeug, insbesondere Nutzfahrzeug, mit einer Brennkraftmaschine (10) nach einem der vorherigen Ansprüche.

## Claims

1. An internal combustion engine (10) for a motor vehicle, with at least one cylinder (12) which has:
a first gas exchange inlet valve (14A) and a second gas exchange inlet valve (14B);
a first gas exchange outlet valve (16A) and a second gas exchange outlet valve (16B); and
a piston (20) which can be moved to and fro and has a piston head (26; 126; 226) which has a plurality of valve seat pockets (30, 32, 34, 36):
a) in each case one valve seat pocket (30, 32, 34, 36) being provided for the first gas exchange inlet valve (14A), the second gas exchange inlet valve (14B), the first gas exchange outlet valve (16A) and the second gas exchange outlet valve (16B), and a plurality of valve seat pockets (30; 32; 34, 36) having different depths at least in part,
- the first gas exchange outlet valve (16A) closing or being capable of closing later than the second gas exchange outlet valve (16B), and a maximum depth of a first outlet valve valve seat pocket (34) of the plurality of valve seat pockets which is provided for the first gas exchange outlet valve (16A) being greater than a maximum depth of a second outlet valve valve seat pocket (36) of the plurality of valve seat pockets which is provided for the second gas exchange outlet valve (16B); and/or
- the first gas exchange inlet valve (14A) opening or being capable of opening earlier than the second gas exchange inlet valve (14B), and a maximum depth of a first inlet valve valve seat pocket (30) of the plurality of valve seat pockets which is provided for the first gas exchange inlet valve (14A) being greater than a maximum depth of the second inlet valve valve seat pocket (32) of the plurality of valve seat pockets which is provided for the second gas exchange inlet valve (14B); or
b) in each case one valve seat pocket (30; 34) being provided for the first gas exchange inlet valve (14A) and the first gas exchange outlet valve (16A), and:
- no valve seat pocket being provided for the second gas exchange inlet valve (14B), and the first gas exchange inlet valve (14A) opening or being capable of opening earlier than the second gas exchange inlet valve (14B); and/or
- no valve seat pocket being provided for the second gas exchange outlet valve (16B), and the first gas exchange outlet valve (16A) closing or being capable of closing later than the second gas exchange outlet valve (16B).

2. The internal combustion engine (10) according to Claim 1:
the first gas exchange outlet valve (16A) and the first gas exchange inlet valve (14A) being actuated or being capable of being actuated with a valve overlap.

3. The internal combustion engine (10) according to either of the preceding claims:
the first gas exchange outlet valve (16A) and the first gas exchange inlet valve (14A) being actuated or being capable of being actuated with a valve overlap which is greater than a valve overlap between the second gas exchange outlet valve (16B) and the second gas exchange inlet valve (14B); or
the first gas exchange outlet valve (16A) and the first gas exchange inlet valve (14A) being actuated or being capable of being actuated with a valve overlap, and the second gas exchange outlet valve (16B) and the second gas exchange inlet valve (14B) being actuated or being capable of being actuated without a valve overlap.

4. The internal combustion engine (10) according to Claim 3:
a valve overlap between the first gas exchange outlet valve (16A) and the first gas exchange inlet valve (14A) lying in a range between 30° CA and 50° CA, in particular at approximately 40° CA; and/or
a valve overlap between the second gas exchange outlet valve (16B) and the second gas exchange inlet valve (14B) lying in a range between 0° CA and 30° CA, in particular at approximately 20° CA.

5. The internal combustion engine (10) according to either of Claims 3 or 4, purging of the cylinder (12) taking place during the valve overlap:
substantially between the first gas exchange inlet valve (14A) and the first gas exchange outlet valve (16A) which, in particular, lie directly or obliquely opposite one another; or
substantially between the first gas exchange inlet valve (14A), the second gas exchange inlet valve (14B) and the first gas exchange outlet valve (16A).

6. The internal combustion engine (10) according to one of the preceding claims:
the first gas exchange outlet valve (16A) and the second gas exchange outlet valve (16B) being actuated or being capable of being actuated independently of one another; and/or
the first gas exchange inlet valve (14A) and the second gas exchange inlet valve (14B) being actuated or being capable of being actuated independently of one another.

7. The internal combustion engine (10) according to one of the preceding claims:
a valve lift of the first gas exchange outlet valve (16A) at the top dead centre of a piston movement of the piston (20) being greater than a valve lift of the second gas exchange outlet valve (16B) at the top dead centre; and/or
a valve lift of the first gas exchange inlet valve (14A) at the top dead centre of the piston movement of the piston (20) being greater than or equal to a valve left of the second gas exchange inlet valve (14B) at the top dead centre.

8. The internal combustion engine (10) according to one of the preceding claims:
the piston head (26; 126; 226) having a piston head recess (28; 128; 228).

9. The internal combustion engine (10) according to one of the preceding claims:
the maximum depth of the first outlet valve valve seat pocket (34) lying in a range up to 4 mm, and the maximum depth of the second outlet valve valve seat pocket (36) lying in a range up to 2 mm.

10. The internal combustion engine (10) according to one of the preceding claims:
the maximum depth of the first inlet valve valve seat pocket (30) lying in a range between greater than 0 mm and 2 mm; and
the maximum depth of the second inlet valve valve seat pocket (32) lying in a range between greater than 0 mm and 2 mm.

11. The internal combustion engine (10) according to one of the preceding claims:
a depth of the plurality of valve seat pockets (30, 32, 34, 36) being adapted in each case to a valve lift of the respective gas exchange inlet valve (14A, 14B) and gas exchange outlet valve (16A, 16B) at the top dead centre of a piston movement of the piston (20).

12. A motor vehicle, in particular a utility vehicle, with an internal combustion engine (10) according to one of the preceding claims.

## Revendications

1. Moteur à combustion interne (10) pour un véhicule automobile, comprenant au moins un cylindre (12) qui présente :
une première soupape d'admission d'échange de gaz (14A) et une deuxième soupape d'admission d'échange de gaz (14B) ;
une première soupape de sortie d'échange de gaz (16A) et une deuxième soupape de sortie d'échange de gaz (16B) ; et
un piston à mouvement alternatif (20), pourvu d'une tête de piston (26 ; 126 ; 226) qui présente plusieurs poches de soupape (30, 32, 34, 36), dans lequel :
a) pour la première soupape d'admission d'échange de gaz (14A), la deuxième soupape d'admission d'échange de gaz (14B), la première soupape de sortie d'échange de gaz (16A) et la deuxième soupape de sortie d'échange de gaz (16B), respectivement une poche de soupape (30, 32, 34, 36) est prévue, et les plusieurs poches de soupape (30 ; 32 ; 34, 36) présentent au moins partiellement des profondeurs différentes, dans lequel
- la première soupape de sortie d'échange de gaz (16A) se ferme ou peut être fermée plus tard que la deuxième soupape de sortie d'échange de gaz (16B), et une profondeur maximale d'une première poche de soupape de sortie (34) des plusieurs poches de soupape, qui est prévue pour la première soupape de sortie d'échange de gaz (16A), est supérieure à une profondeur maximale d'une deuxième poche de soupape de sortie (36) des plusieurs poches de soupape, qui est prévue pour la deuxième soupape de sortie d'échange de gaz (16B) ; et/ou
- la première soupape d'admission d'échange de gaz (14A) s'ouvre ou peut être ouverte plus tôt que la deuxième soupape d'admission d'échange de gaz (14B), et une profondeur maximale d'une première poche de soupape d'admission (30) des plusieurs poches de soupape, qui est prévue pour la première soupape d'admission d'échange de gaz (14A), est supérieure à une profondeur maximale d'une deuxième poche de soupape d'admission (32) des plusieurs poches de soupape, qui est prévue pour la deuxième soupape d'admission d'échange de gaz (14B) ; ou
b) pour la première soupape d'admission d'échange de gaz (14A) et la première soupape de sortie d'échange de gaz (16A), respectivement une poche de soupape (30 ; 34) est prévue, et dans lequel :
- pour la deuxième soupape d'admission d'échange de gaz (14B), aucune poche de soupape n'est prévue, et la première soupape d'admission d'échange de gaz (14A) s'ouvre ou peut être ouverte plus tôt que la deuxième soupape d'admission d'échange de gaz (14B) ; et/ou
- pour la deuxième soupape de sortie d'échange de gaz (16B), aucune poche de soupape n'est prévue, et la première soupape de sortie d'échange de gaz (16A) se ferme ou peut être fermée plus tard que la deuxième soupape de sortie d'échange de gaz (16B).

2. Moteur à combustion interne (10) selon la revendication 1, dans lequel :
la première soupape de sortie d'échange de gaz (16A) et la première soupape d'admission d'échange de gaz (14A) sont actionnées ou peuvent être actionnées avec un chevauchement des soupapes.

3. Moteur à combustion interne (10) selon l'une quelconque des revendications précédentes, dans lequel :
la première soupape de sortie d'échange de gaz (16A) et la première soupape d'admission d'échange de gaz (14A) sont actionnées ou peuvent être actionnées avec un chevauchement des soupapes qui est supérieur à un chevauchement des soupapes entre la deuxième soupape de sortie d'échange de gaz (16B) et la deuxième soupape d'admission d'échange de gaz (14B) ; ou
la première soupape de sortie d'échange de gaz (16A) et la première soupape d'admission d'échange de gaz (14A) sont actionnées ou peuvent être actionnées avec un chevauchement des soupapes, et la deuxième soupape de sortie d'échange de gaz (16B) et la deuxième soupape d'admission d'échange de gaz (14B) sont actionnées ou peuvent être actionnées sans chevauchement des soupapes.

4. Moteur à combustion interne (10) selon la revendication 3, dans lequel :
un chevauchement des soupapes entre la première soupape de sortie d'échange de gaz (16A) et la première soupape d'admission d'échange de gaz (14A) est situé dans une plage entre 30° KW (angle de vilebrequin) et 50° KW, en particulier à environ 40° KW ; et/ou
un chevauchement des soupapes entre la deuxième soupape de sortie d'échange de gaz (16B) et la deuxième soupape d'admission d'échange de gaz (14B) est situé dans une plage entre 0° KW et 30° KW, en particulier à environ 20° KW.

5. Moteur à combustion interne (10) selon l'une quelconque des revendications 3 à 4, dans lequel un rinçage du cylindre (12) pendant le chevauchement des soupapes :
a lieu substantiellement entre la première soupape d'admission d'échange de gaz (14A) et la première soupape de sortie d'échange de gaz (16A) qui sont opposées en particulier directement ou en oblique ; ou
a lieu substantiellement entre la première soupape d'admission d'échange de gaz (14A), la deuxième soupape d'admission d'échange de gaz (14B) et la première soupape de sortie d'échange de gaz (16A).

6. Moteur à combustion interne (10) selon l'une quelconque des revendications précédentes, dans lequel :
la première soupape de sortie d'échange de gaz (16A) et la deuxième soupape de sortie d'échange de gaz (16B) sont actionnées ou peuvent être actionnées indépendamment l'une de l'autre ; et/ou
la première soupape d'admission d'échange de gaz (14A) et la deuxième soupape d'admission d'échange de gaz (14B) sont actionnées ou peuvent être actionnées indépendamment l'une de l'autre.

7. Moteur à combustion interne (10) selon l'une quelconque des revendications précédentes, dans lequel :
une levée de soupape de la première soupape de sortie d'échange de gaz (16A) au point mort haut d'un mouvement de piston du piston (20) est supérieure à une levée de soupape de la deuxième soupape de sortie d'échange de gaz (16B) au point mort haut ; et/ou
une levée de soupape de la première soupape d'admission d'échange de gaz (14A) au point mort haut du mouvement de piston du piston (20) est supérieure ou égale à une levée de soupape de la deuxième soupape d'admission d'échange de gaz (14B) au point mort haut.

8. Moteur à combustion interne (10) selon l'une quelconque des revendications précédentes, dans lequel :
la tête de piston (26 ; 126 ; 226) présente une cuvette de tête de piston (28 ; 128 ; 228).

9. Moteur à combustion interne (10) selon l'une quelconque des revendications précédentes, dans lequel :
la profondeur maximale de la première poche de soupape de sortie (34) est située dans une plage jusqu'à 4 mm, et la profondeur maximale de la deuxième poche de soupape de sortie (36) est située dans une plage jusqu'à 2 mm.

10. Moteur à combustion interne (10) selon l'une quelconque des revendications précédentes, dans lequel :
la profondeur maximale de la première poche de soupape d'admission (30) est située dans une plage entre supérieur à 0 mm et 2 mm ; et
la profondeur maximale de la poche de soupape d'admission (32) est située dans une plage entre supérieur à 0 mm et 2 mm.

11. Moteur à combustion interne (10) selon l'une quelconque des revendications précédentes, dans lequel :
une profondeur des plusieurs poches de soupape (30, 32, 34, 36) est adaptée respectivement à une levée de soupape de la soupape d'admission d'échange de gaz (14A, 14B) et de la soupape de sortie d'échange de gaz (16A, 16B) respectives au point mort haut d'un mouvement de piston du piston (20).

12. Véhicule automobile, en particulier véhicule utilitaire, comprenant un moteur à combustion interne (10) selon l'une quelconque des revendications précédentes.
